# DEMANDE DE BREVET EUROPEEN

(11) **EP 2 830 349 A1**
(43) Date de publication de la demande: **28.01.2015**
(21) Numéro de dépôt: 13290172.9
(22) Date de dépôt: 22.07.2013
(51) Int. Cl.: H04W 24/08

(54) **Dispositifs et méthode de détection automatique d'une défaillance d'un émetteur/récepteur radio**

(71) Demandeur: Siemens S.A.S., 93527 Saint-Denis Cedex 2 (FR); Siemens A/S, 2750 Ballerup (DK)
(72) Inventeur: Chazel, Anne-Sophie, 92350 Le Plessis-Robinson (FR); De Lajudie-Dezellus, Raphaëlle, 92120 Montrouge (FR); Bluszcz, Tomasz, 2720 Vanlose (DK)
(74) Mandataire: Fischer, Michael

(57) **Abrégé**

La présente invention décrit une méthode et des dispositifs pour détecter automatiquement une défaillance d'un émetteur/récepteur radio d'un système de communication, ladite méthode comprenant les étapes suivantes:
- une émission d'un signal SAᵢ par un émetteur/récepteur Aᵢ;
- une réception dudit signal SAᵢ par un émetteur/récepteur Bⱼ;
- une émission par ledit émetteur/récepteur Bⱼ d'un signal SBⱼ;
- une réception dudit signal SBⱼ par ledit émetteur/récepteur Aᵢ;

ladite méthode étant caractérisée en ce que:
- ledit signal SBⱼ comprend une donnée EBⱼ_SBⱼ relative à la puissance à laquelle est émis ledit signal SBⱼ par ledit émetteur/récepteur Bⱼ, et une donnée RBⱼ_SAᵢ relative à la puissance du signal SAᵢ à sa réception par ledit émetteur/récepteur Bⱼ;
- par comparaison des rapports des données EBⱼ_SBⱼ/RAᵢ_SBⱼ et EAᵢ_SAᵢ/RBⱼ_SAᵢ est déterminée la défaillance d'un desdits émetteurs/récepteurs Aᵢ ou Bⱼ, où les données RAᵢ_SBⱼ et EAᵢ_SAᵢ sont respectivement une donnée relative à la puissance du signal SBⱼ à sa réception par l'émetteur/récepteur Aᵢ, et une donnée relative à la puissance à laquelle a été émis le signal SAᵢ par ledit émetteur/récepteur Aᵢ.

## Description

La présente invention concerne un ensemble de dispositifs et une méthode de détection automatique d'une défaillance d'un émetteur/récepteur radio selon le préambule des revendications 1, 10 et 12.

En particulier, la présente invention se rapporte aux véhicules guidés utilisant une liaison radio afin d'envoyer et recevoir des données. Par véhicule guidé, il est notamment fait référence de manière générale aux moyens de transport en commun tels que des bus, trolleybus, tramways, métros, trains ou unités de train, etc., mais aussi aux moyens de transport de charge tel que, par exemple, les ponts roulants, pour lesquels l'aspect sécuritaire est très important et pour lesquels le guidage est assuré en particulier par au moins un guide, p. ex. un rail, dont le rôle est de définir la trajectoire du véhicule guidé au cours de son déplacement.

Les véhicules guidés sont généralement équipés de dispositifs embarqués permettant une communication avec des dispositifs sols, et/ou avec d'autres véhicules guidés, et/ou encore avec un poste de commande distant. De manière générale, la perturbation d'une communication entre un premier objet OA mobile, par exemple ledit véhicule guidé, et un second objet OB fixe par rapport à l'objet OA, par exemple un dispositif sol, peut avoir de nombreuses causes. En effet, l'émetteur/récepteur de l'objet OA et/ou de l'objet OB peut ou peuvent être défaillant(s), et/ou la liaison radio entre l'objet OA et l'objet OB peut être perturbée par un obstacle ou une source électromagnétique. Il est ainsi difficile de détecter un problème d'émission ou de réception radio par un objet OA mobile à partir d'une mesure instantanée de la puissance du signal radio reçu, puisque cette dernière peut par exemple varier en fonction de la distance séparant l'objet OA de l'objet OB, et non uniquement du fait que l'objet OB aurait un problème d'émission, ou l'objet OA de réception. De même, et symétriquement, une atténuation de la puissance d'un signal reçu par l'objet OB fixe peut avoir différentes causes, comme par exemple une coupure de la liaison radio entre l'objet OA mobile et l'objet OB fixe résultant de l'éloignement de l'objet OA par rapport à l'objet OB.

Dans tous les cas, il faut pouvoir détecter une vraie panne radio d'un émetteur/récepteur mobile ou fixe d'une fausse panne radio pour laquelle l'atténuation de la puissance d'un signal ne provient pas d'une défaillance dudit émetteur/récepteur. En effet, dans le cas des véhicules guidés, bien que leurs systèmes de communication soient basés sur une redondance de leurs équipements de communications permettant de supporter une panne d'un émetteur/récepteur, il faut pouvoir détecter lesdites pannes ou défaillances des émetteurs/récepteurs au plus tôt afin de pouvoir les réparer avant qu'une autre panne ne coupe définitivement la communication entre l'objet OA mobile (p. ex. un train) et l'objet OB fixe (p. ex. un dispositif sol).

Afin de repérer les pannes ou défaillances des dispositifs ou équipements de communication des véhicules guidés ou dispositifs sols, il est usuel d'inspecter périodiquement lesdits équipements avec un émetteur de référence afin de vérifier la puissance du signal reçu, ou avec un mesureur calibré afin de mesurer la puissance du signal émis. Cependant, de telles vérifications sont coûteuses en temps et en personnel, et exigent le déplacement sur place afin d'effectuer les mesures de puissance. En conséquence, la périodicité de l'inspection est basse et il peut parfois s'écouler plusieurs mois entre deux inspections successives.

Un objectif de la présente demande est ainsi de pouvoir détecter automatiquement une panne ou défaillance d'un émetteur/récepteur radio mobile ou fixe destiné à communiquer avec un émetteur/récepteur fixe ou respectivement mobile, où le terme "émetteur/récepteur" fait référence à un dispositif capable d'émettre/recevoir une communication radio.

Afin de parvenir à cet objectif, un ensemble de dispositifs et une méthode sont proposés par le contenu des revendications 1, 10 et 12.

Un ensemble de sous-revendications présente également des avantages de l'invention.

La présente invention se rapporte ainsi à une méthode de détection automatique d'une défaillance ou panne d'un émetteur/récepteur radio d'un système de communication comprenant un premier ensemble A d'émetteurs/récepteurs radios comprenant n émetteurs/récepteurs avec n ≥ 1, par exemple A = {A₁, ..., Aₙ}, et un second ensemble B d'émetteurs/récepteurs radios comprenant m émetteurs/récepteurs avec m ≥ 1, par exemple B = {B₁, ..., Bₘ}, un émetteur/récepteur Aᵢ appartenant au premier ensemble A et Bⱼ appartenant au second ensemble B étant aptes à communiquer l'un avec l'autre, l'indice i pouvant prendre des valeurs de 1 à n et permettant ainsi de différentier et d'identifier lesdits émetteurs/récepteurs du premier ensemble A, et l'indice j pouvant prendre des valeurs de 1 à m et permettant ainsi de différentier et d'identifier lesdits émetteurs/récepteurs du second ensemble B, ledit émetteur/récepteur Aᵢ étant en particulier mobile, ledit émetteur/récepteur Bⱼ étant en particulier fixe, préférentiellement tous lesdits émetteurs/récepteurs de B sont fixes, i.e. immobiles (vitesse nulle) par rapport à l'émetteur/récepteur Aᵢ qui est mobile (vitesse non nulle), ladite méthode comprenant les étapes suivantes:
- une émission d'un signal SAᵢ par ledit émetteur/récepteur Aᵢ;
- une réception dudit signal SAᵢ par ledit émetteur/récepteur Bⱼ;
- une émission par ledit émetteur/récepteur Bⱼ d'un signal SBⱼ;
- une réception dudit signal SBⱼ par ledit émetteur/récepteur Aᵢ;
ladite méthode étant caractérisée en ce que:
- ledit signal SBⱼ comprend une donnée EBⱼ_SBⱼ relative à la puissance à laquelle est émis ledit signal SBⱼ par ledit émetteur/récepteur Bⱼ, ladite donnée EBⱼ_SBⱼ étant par exemple déduite ou calculée à partir d'un premier groupe de paramètres utilisés pour configurer un amplificateur de signal dudit émetteur/récepteur Bⱼ destiné notamment à augmenter l'intensité dudit signal SBⱼ et/ou mesurée par un dispositif de mesure de puissance d'émission capable de coopérer avec ledit émetteur/récepteur Bⱼ, et une donnée RBⱼ_SAᵢ relative à la puissance du signal SAᵢ à sa réception par ledit émetteur/récepteur Bⱼ, cette dernière étant par exemple calculée/déduite à partir d'un second groupe de paramètres de configuration dudit amplificateur de signal dudit émetteur/récepteur Bⱼ et/ou mesurable par un dispositif de mesure de puissance de réception capable de coopérer avec ledit émetteur/récepteur Bⱼ, la donnée EBⱼ_SBⱼ, respectivement RBⱼ_SAᵢ, étant par exemple la valeur de la puissance d'émission par ledit émetteur/récepteur Bⱼ dudit signal SBⱼ, et respectivement la valeur de la puissance dudit signal SAᵢ à sa réception par ledit émetteur/récepteur Bⱼ;
- par une comparaison des rapports des données P-Bⱼ_SBⱼ / RAᵢ_SBⱼ et EAᵢ_SAᵢ / RBⱼ_SAᵢ est déterminée la défaillance ou panne d'un desdits émetteurs/récepteurs Aᵢ ou Bⱼ, ladite comparaison étant notamment effectuée par un analyseur de signal configuré pour coopérer avec ledit émetteur/récepteur Aᵢ afin de détecter ladite panne à partir des valeurs des données EBⱼ_SBⱼ, RAᵢ_SBⱼ, EAᵢ_SAᵢ et RBⱼ_SAᵢ, où RAᵢ_SBⱼ et EAᵢ_SAᵢ sont respectivement une donnée relative à la puissance du signal SBⱼ à sa réception par l'émetteur/récepteur Aᵢ, la donnée RAᵢ_SBⱼ étant par exemple déduite ou calculée à partir d'un second groupe de paramètres utilisés pour configurer un amplificateur de signal dudit émetteur/récepteur Aⱼ et/ou mesurée par un dispositif de mesure de puissance de réception configuré pour coopérer avec ledit émetteur/récepteur Aᵢ, et la donnée EA_{i_}SAᵢ étant une donnée relative à la puissance à laquelle a été émis le signal SAᵢ par ledit émetteur/récepteur Aᵢ, notamment calculée/déduite à partir d'un premier groupe de paramètres de configuration dudit amplificateur de signal dudit émetteur/récepteur Aᵢ et/ou mesurée par un dispositif de mesure de puissance d'émission apte à coopérer avec ledit émetteur/récepteur Aᵢ, ledit émetteur/récepteur Aᵢ et ledit émetteur/récepteur Bⱼ étant en particulier en mouvement l'un par rapport à l'autre. Préférentiellement, le signal SAᵢ, émis par l'émetteur/récepteur Aᵢ, comprend ladite donnée EAᵢ_SAᵢ et/ou ladite donnée RAᵢ_SBⱼ notamment lorsque le signal SAᵢ est subséquent à la réception d'un signal SBⱼ par ledit émetteur/récepteur Aᵢ, ladite donnée EAᵢ_SAᵢ étant par exemple la valeur de la puissance d'émission par ledit émetteur/récepteur Aᵢ dudit signal SAᵢ, et la donnée RA_{i_}SBⱼ étant par exemple la valeur de la puissance dudit signal SBⱼ à sa réception par ledit émetteur/récepteur Aᵢ.

Ainsi, selon l'invention, chacun desdits émetteur/récepteur Aᵢ et Bⱼ peut en particulier comprendre au moins un amplificateur de signal configurable selon un premier groupe de paramètres utilisés pour augmenter l'intensité du signal SAᵢ ou respectivement SBⱼ envoyé par ledit émetteur/récepteur Aᵢ ou respectivement Bⱼ, et selon un second groupe de paramètres utilisés pour augmenter l'intensité du signal SBⱼ ou respectivement SAᵢ reçu par ledit émetteur/récepteur Aᵢ ou respectivement Bⱼ. Evidemment, ledit émetteur/récepteur Aᵢ et/ou respectivement Bⱼ pourrait également comprendre deux amplificateurs différents, un premier amplificateur dévolu à l'amplification de signaux réceptionnées, et un second amplificateur dévolu à l'amplification de signaux destinés à être envoyés.

Préférentiellement, ledit émetteur/récepteur Aᵢ et/ou ledit émetteur/récepteur Bⱼ comprennent chacun un amplificateur de signal tel que décrit précédemment et coopèrent avec un dispositif de mesure de puissance d'émission et/ou réception. Une telle coopération a l'avantage de permettre une détermination de l'origine de la panne par comparaison des valeurs mesurées par le dispositif de mesure de puissance d'émission ou respectivement réception avec les valeurs correspondantes calculées/déduites à partir des paramètres d'amplification de signal de l'amplificateur. Par comparaison des valeurs de puissance des signaux, il est possible de distinguer une panne provenant de l'électronique d'une panne provenant de parties passives d'une antenne ou de câblages.

Ladite méthode selon l'invention comprend en particulier, une détection d'une défaillance ou panne dès que le rapport des données (EBⱼ_SBⱼ · RBⱼ_SAᵢ) / (RA_{i_}SBj · EAi_SAᵢ) n'est plus compris entre des valeurs seuils prédéfinies de détection de panne V1_{i,j} et V2_{i,j,} i.e. dès que V1_{i,j} ≤ (EBj_SBⱼ · RBj_SAᵢ)/(RAᵢ_SBⱼ · EA_{i_}SAᵢ) ≤ V2_{i,j} n'est plus vrai, i.e. si EBⱼ_SBⱼ · RBⱼ_SAᵢ / RAᵢ_SBⱼ · EA_{i_}SAᵢ ≤ V1_{i,j} et/ou EB_{j_}SBⱼ · RB_{j_}SAᵢ / RAᵢ_SBⱼ · EAᵢ_SAᵢ ≥ V2_{i,j}.

La méthode de détection automatique d'une défaillance ou panne d'un émetteur/récepteur radio selon l'invention comprend préférentiellement les étapes suivantes:
- pour un signal SBⱼ, respectivement SAᵢ, envoyé par un émetteur/récepteur Bⱼ, respectivement Aᵢ, et reçu par un émetteur/récepteur Aᵢ, respectivement Bⱼ, en particulier pour chaque signal SBⱼ, respectivement SAᵢ, reçu par ledit émetteur/récepteur Aᵢ, respectivement Bⱼ, au moins un desdits émetteurs/récepteurs Aᵢ, Bⱼ, étant préférentiellement en déplacement par rapport à l'autre, un envoi par ledit émetteur/récepteur Aᵢ, respectivement Bⱼ, d'un signal SAᵢ, respectivement SBⱼ, audit émetteur/récepteur Bⱼ, respectivement Aᵢ, ayant envoyé ledit signal SBⱼ, respectivement SAᵢ, ledit signal SAᵢ, respectivement SBⱼ, comprenant une donnée RAᵢ_SBⱼ, respectivement RB_{j_}SAᵢ, relative à la puissance à laquelle a été reçu ledit signal SBⱼ, respectivement SAᵢ, par ledit émetteur/récepteur Aᵢ, respectivement Bⱼ; et
- une incorporation dans ledit signal SAᵢ, respectivement SBⱼ, émis par ledit émetteur/récepteur Aᵢ, respectivement Bⱼ, en particulier dans chaque signal SAᵢ, respectivement SBⱼ, émis par ledit émetteur/récepteur Aᵢ, respectivement Bⱼ, d'une donnée EA_{i_}SAᵢ, respectivement EBⱼ_SBⱼ, de la puissance à laquelle ledit signal SAᵢ, respectivement SBⱼ, a été émis par ledit émetteur/récepteur Aᵢ, respectivement Bⱼ;
- une comparaison des rapports des puissances EBⱼ_SBⱼ / RAᵢ_SBⱼ et EAᵢ₋SAᵢ / RBⱼ_SAᵢ par exemple par un analyseur de signal équipant au moins un desdits émetteurs/récepteurs Aᵢ, Bⱼ, afin de détecter ladite défaillance ou panne. Ladite défaillance étant préférentiellement détectée dès que: V1_{i,j} ≤ (EB_{j_}SBⱼ · RBⱼ_SAᵢ)/(RAᵢ_SBⱼ · EAᵢ_SAᵢ) ≤ V2_{i,j} n'est plus vrai, où V1_{i,j} et V2_{i,j} sont lesdites valeurs seuils prédéfinies de détection de panne.

Préférentiellement, la méthode selon l'invention comprend en outre une transmission ou communication d'une information relative à ladite défaillance. Par exemple, ladite information relative à la défaillance est transmise par un premier dispositif, respectivement un second dispositif, qui a automatiquement détecté ladite panne ou défaillance, à un autre premier dispositif et/ou à un second dispositif, respectivement audit premier dispositif et/ou à un autre premier dispositif, ledit premier dispositif, respectivement second dispositif coopérant en particulier avec l'émetteur/récepteur Aᵢ, respectivement Bⱼ. Ledit premier et second dispositifs de détection automatique d'une panne ou défaillance d'un émetteur/récepteur seront détaillés plus loin. En particulier, un dispositif de communication équipant ledit premier et/ou ledit second dispositif de détection est apte à envoyer une information relative à ladite défaillance dès que cette dernière est détectée par un analyseur de signal. En particulier, ladite information est envoyée à l'ensemble des dispositifs de communications coopérant avec des émetteurs/récepteurs Aᵢ, Bⱼ qui sont en intercommunication. Par exemple, si une défaillance de l'émetteur/récepteur Aᵢ qui communique avec l'émetteur/récepteur Bⱼ est détectée, alors une information relative à cette défaillance est envoyée par le dispositif de communication coopérant avec l'émetteur/récepteur Aᵢ à un dispositif de communication coopérant avec l'émetteur/récepteur Bⱼ, et inversement.

Préférentiellement, chaque émetteur/récepteur dudit premier ensemble A ou respectivement dudit second ensemble B est mobile, préférentiellement, chaque émetteur/récepteur du premier ensemble A est configuré pour équiper un objet mobile, et chaque émetteur/récepteur du second ensemble B, respectivement du premier ensemble A, est fixe, préférentiellement chaque émetteur/récepteur du second ensemble B est configuré pour équiper un objet fixe. Ladite méthode de détection automatique selon l'invention permet ainsi de détecter quel émetteur/récepteur radio parmi un groupe comprenant au moins un émetteur/récepteur radio mobile (par exemple embarqué dans un objet mobile) et un émetteur/récepteur radio fixe (par exemple équipant un objet immobile ou fixe par rapport à l'objet mobile) est en panne ou défaillant.

La présente invention se rapporte également à un premier dispositif pour détecter automatiquement une panne ou défaillance d'un émetteur/récepteur radio d'un système de communication comprenant un premier ensemble A d'émetteurs/récepteurs radios comprenant n émetteurs/récepteurs avec n ≥ 1, par exemple A = {Aᵢ,...,A_{n}}, et un second ensemble B d'émetteurs/récepteurs radios comprenant m émetteurs/récepteurs avec m ≥ 1, par exemple B = {B₁, ..., Bₘ}, un émetteur/récepteur Aᵢ appartenant audit premier ensemble A et Bⱼ appartenant audit second ensemble B étant aptes à communiquer l'un avec l'autre, chaque émetteur/récepteur Aᵢ dudit premier ensemble A (par exemple A₁, A_{2,} ..., Aₙ), étant capable d'émettre un signal SAᵢ (par exemple respectivement SA₁, SA₂, ..., SAₙ) et de recevoir un signal SBⱼ (par exemple SB₁, SB₂, ..., SBₘ), et chaque émetteur/récepteur Bⱼ dudit second ensemble B (par exemple B₁, B₂, ..., Bₘ) étant capable d'émettre ledit signal SBⱼ et de recevoir ledit signal SAᵢ, ledit émetteur/récepteur Aᵢ étant en particulier configuré pour être mobile et ledit émetteur/récepteur Bⱼ étant en particulier configuré pour être immobile ou fixe, ledit premier dispositif étant quant à lui caractérisé en ce qu'il comprend au moins:
- un moyen de détermination d'une puissance d'émission de signal capable d'une part de déterminer la puissance du signal SAᵢ à son émission par l'émetteur/récepteur Aᵢ avec lequel il est apte à coopérer et d'autre part de fournir une donnée EAᵢ₋SAᵢ relative à la puissance à laquelle est émis le signal SAᵢ par ledit émetteur/récepteur Aᵢ;
- un moyen de détermination d'une puissance de réception de signal capable d'une part de déterminer la puissance du signal SBⱼ à sa réception par l'émetteur/récepteur Aᵢ avec lequel il est apte à coopérer et d'autre part de fournir une donnée RAᵢ_SBⱼ relative à ladite puissance du signal SBⱼ à sa réception par l'émetteur/récepteur Aᵢ;
- préférentiellement un dispositif d'incorporation de données de puissance d'un signal capable d'incorporer au signal SAᵢ d'une part la donnée RAᵢ_SBⱼ relative à la puissance de réception du signal SBⱼ reçu par l'émetteur/récepteur Aᵢ et déterminable par ledit moyen de détermination de puissance de réception et d'autre part la donnée EAᵢ_SAᵢ relative à la puissance d'émission du signal SAᵢ déterminable par ledit moyen de détermination de puissance d'émission et destinée à être reçu par l'émetteur/récepteur Bⱼ;
- un analyseur de signal capable de collecter les données EAᵢ_SAᵢ et RAᵢ_SBⱼ auprès desdits moyens de détermination de puissance d'émission et de réception configurés pour coopérer avec ledit émetteur/récepteur Aᵢ, ainsi que d'extraire dudit signal SBⱼ des données EBⱼ_SBⱼ et RBⱼ_SAᵢ, où RBⱼ_SAᵢ et EBⱼ_SBⱼ sont respectivement une donnée relative à la puissance du signal SAᵢ à sa réception par l'émetteur/récepteur Bⱼ notamment mesurée par un dispositif de mesure de puissance de réception configuré pour coopérer avec ledit émetteur/récepteur Bⱼ et/ou calculée/déduite par un amplificateur à partir de paramètres utilisés pour amplifier ledit signal, et une donnée relative à la puissance à laquelle a été émis le signal SBⱼ par ledit émetteur/récepteur Bⱼ, notamment mesurée par un dispositif de mesure de puissance d'émission configuré pour coopérer avec ledit émetteur/récepteur Bⱼ et/ou calculée/déduite par un amplificateur à partir de paramètres utilisés pour amplifier ledit signal, les données RBⱼ_SAᵢ et EBⱼ_SBⱼ ayant en particulier été incorporées audit signal SBⱼ par un dispositif d'incorporation de données de puissance configuré pour coopérer avec ledit émetteur/récepteur Bⱼ, ledit analyseur de signal étant de plus capable de comparer automatiquement les rapports des données EBⱼ_SBⱼ / RAᵢ_SBⱼ et EAᵢ₋SAᵢ / RBⱼ_SAᵢ afin de déterminer une défaillance ou panne d'un desdits émetteurs/récepteurs Aᵢ et/ou Bⱼ;
- préférentiellement, un dispositif de communication capable d'échanger avec un dispositif de communication d'un autre premier dispositif et/ou d'un second dispositif une information relative à ladite défaillance ou panne d'au moins un desdits émetteurs/récepteurs Aᵢ et/ou Bⱼ.

Des exemples de moyens de détermination d'une puissance d'émission, ou respectivement de réception, dudit premier dispositif selon l'invention sont notamment:
- un dispositif de mesure de puissance d'émission, respectivement de réception, de signal capable d'une part de mesurer la puissance du signal SAᵢ à son émission, respectivement SBⱼ à sa réception, par l'émetteur/récepteur Aᵢ avec lequel il est apte à coopérer, et d'autre part de fournir la donnée EAᵢ_SAᵢ, respectivement RAᵢ_SBⱼ, relative à la puissance à laquelle est émis le signal SAᵢ, respectivement la puissance du signal SBⱼ à sa réception, par ledit émetteur/récepteur Aᵢ, ledit dispositif de mesure de puissance d'émission, respectivement de réception, étant configuré pour coopérer avec ledit émetteur/récepteur Aᵢ;
- un amplificateur de signal configurable selon un premier groupe de paramètres utilisés pour augmenter l'intensité du signal SAᵢ envoyé par ledit émetteur/récepteur Aᵢ, et respectivement selon un second groupe de paramètres utilisés pour augmenter l'intensité du signal SBⱼ reçu par ledit émetteur/récepteur Aᵢ, ledit amplificateur étant capable de déterminer, par exemple par calcul, une puissance d'émission de signal, ou respectivement de réception de signal, à partir desdits paramètres dudit premier groupe, ou respectivement dudit second groupe, et à fournir ladite donnée EAᵢ-SAᵢ, ou respectivement RAᵢ_SBⱼ.

La présente invention se rapporte également à un second dispositif pour détecter automatiquement une défaillance ou panne d'un émetteur/récepteur radio d'un système de communication comprenant un premier ensemble A d'émetteurs/récepteurs radios comprenant n émetteurs/récepteurs avec n ≥ 1, par exemple A = {A₁, ,Aₙ}, et un second ensemble B d'émetteurs/récepteurs radios comprenant m émetteurs/récepteurs avec m ≥ 1, par exemple B = {B₁, , Bₘ}, un émetteur/récepteur Aᵢ appartenant audit premier ensemble A et Bⱼ appartenant audit second ensemble B étant aptes à communiquer l'un avec l'autre, ledit émetteur/récepteur Aᵢ étant capable d'émettre un signal SAᵢ et de recevoir un signal SBⱼ, et ledit émetteur/récepteur Bⱼ étant capable d'émettre ledit signal SBⱼ et de recevoir ledit signal SAᵢ, ledit émetteur/récepteur Aᵢ étant en particulier configuré pour être mobile et ledit émetteur/récepteur Bⱼ étant en particulier configuré pour être immobile ou fixe, ledit second dispositif étant quant à lui caractérisé en ce qu'il comprend au moins:
- un moyen de détermination d'une puissance d'émission de signal capable d'une part de déterminer la puissance du signal SBⱼ à son émission par l'émetteur/récepteur Bⱼ avec lequel il est apte à coopérer et d'autre part de fournir une donnée EBⱼ_SBⱼ relative à la puissance à laquelle est émis le signal SBⱼ par ledit émetteur/récepteur Bⱼ;
- un moyen de détermination d'une puissance de réception de signal capable d'une part de déterminer la puissance du signal SAᵢ à sa réception par l'émetteur/récepteur Bⱼ avec lequel il est apte à coopérer et d'autre part de fournir une donnée RBⱼ_SAᵢ relative à la puissance du signal SAᵢ à sa réception par l'émetteur/récepteur Bⱼ;
- un dispositif d'incorporation de données de puissance d'un signal capable d'incorporer au signal SBⱼ d'une part la donnée RBⱼ_SAᵢ relative à la puissance de réception du signal SAᵢ reçu par l'émetteur/récepteux Bⱼ et déterminable par ledit moyen de détermination de puissance de réception et d'autre part la donnée EBⱼ_SBⱼ relative à la puissance d'émission du signal SBⱼ déterminable par ledit moyen de détermination de puissance d'émission et destinée à être reçue par l'émetteur/récepteur Aᵢ;
- préférentiellement un analyseur de signal capable de collecter les données EDⱼ_SBⱼ et RBⱼ_SAᵢ auprès desdits moyens de détermination de puissance d'émission et de réception configurés pour coopérer avec ledit émetteur/récepteur Bⱼ, ainsi que d'extraire dudit signal SAᵢ des données EAᵢ_SAᵢ et RAᵢ_SBⱼ, où RAᵢ_SBⱼ et EA_{i_}SAᵢ sont respectivement une donnée relative à la puissance du signal SBⱼ à sa réception par l'émetteur/récepteur Aᵢ notamment mesurée par un dispositif de mesure de puissance de réception configuré pour coopérer avec ledit émetteur/récepteur Aᵢ, et une donnée relative à la puissance à laquelle a été émis le signal SAᵢ par ledit émetteur/récepteur Aᵢ, notamment mesurée par un dispositif de mesure de puissance d'émission configuré pour coopérer avec ledit émetteur/récepteur Aᵢ et/ou calculée/déduite par un amplificateur à partir de paramètres utilisés pour amplifier ledit signal, les données RAᵢ_SBⱼ et EAᵢ_SAᵢ ayant en particulier été incorporées audit signal SAᵢ par un dispositif d'incorporation de données de puissance configuré pour coopérer avec ledit émetteur/récepteur Aᵢ, ledit analyseur de signal étant de plus capable de comparer automatiquement les rapports des données EBⱼ_SBⱼ / RAᵢ_SBⱼ et EAᵢ_SAᵢ / RBⱼ_SAᵢ afin de déterminer une défaillance ou panne d'un desdits émetteurs/récepteurs Aᵢ ou Bⱼ;
- préférentiellement, un dispositif de communication capable d'échanger avec un dispositif de communication d'un autre premier dispositif et/ou d'un second dispositif une information relative à ladite défaillance ou panne d'au moins un desdits émetteurs/récepteurs Aᵢ et/ou Bⱼ. Par exemple, si un premier dispositif coopérant avec l'émetteur/récepteur Aᵢ détecte une défaillance ou panne d'au moins un desdits émetteurs/récepteurs Aᵢ et/ou Bⱼ, son dispositif de communication est ensuite capable de transmettre une information relative à cette défaillance au dispositif de communication d'un second dispositif coopérant avec l'émetteur/récepteur Bⱼ, et/ou à un dispositif de communication d'un autre premier dispositif coopérant avec un émetteur/récepteur Aᵤ appartenant à l'ensemble des émetteurs/récepteurs A. Inversement, si un dispositif de communication d'un second dispositif coopérant avec un émetteur/récepteur Bⱼ détecte une défaillance ou panne d'un desdits émetteurs/récepteurs Aᵢ et/ou Bⱼ, son dispositif de communication est ensuite capable de communiquer une information relative à ladite défaillance au dispositif de communication du premier dispositif coopérant avec l'émetteur/récepteur Aᵢ et/ou à un dispositif de communication d'un autre premier dispositif coopérant avec un émetteur/récepteur Aᵤ appartenant à l'ensemble des émetteurs/récepteurs A.

Des exemples de moyens de détermination d'une puissance d'émission, ou respectivement de réception, dudit second dispositif selon l'invention sont similaires à ceux dudit premier dispositif selon l'invention. Ce sont par exemple:
- un dispositif de mesure de puissance d'émission, respectivement de réception, de signal capable d'une part de mesurer la puissance du signal SBⱼ à son émission, respectivement SAᵢ à sa réception, par l'émetteur/récepteur Bⱼ avec lequel il est apte à coopérer, et d'autre part de fournir la donnée EBⱼ_SBⱼ, respectivement RBⱼ_SAᵢ, relative à la puissance à laquelle est émis le signal SBⱼ, respectivement la puissance du signal SAᵢ à sa réception, par ledit émetteur/récepteur Bⱼ, ledit dispositif de mesure de puissance d'émission, respectivement de réception, étant configuré pour coopérer avec ledit émetteur/récepteur Bⱼ;
- un amplificateur de signal configurable selon un premier groupe de paramètres utilisés pour augmenter l'intensité du signal SBⱼ envoyé par ledit émetteur/récepteur Bⱼ, et respectivement selon un second groupe de paramètres utilisés pour augmenter l'intensité du signal SAᵢ reçu par ledit émetteur/récepteur Bⱼ, ledit amplificateur étant capable de déterminer, par exemple par calcul, une puissance d'émission de signal, ou respectivement de réception de signal, à partir desdits paramètres dudit premier groupe, ou respectivement dudit second groupe, et à fournir ladite donnée EBⱼ_SBⱼ, ou respectivement RBⱼ_SAᵢ.
En particulier, ledit moyen de détermination peut être intégré à une carte radio dudit émetteur/récepteur Aᵢ ou Bⱼ.

La présente invention concerne également un système de détection automatique d'une défaillance ou panne d'un émetteur/récepteur radio d'un système de communication comprenant un premier ensemble A d'émetteurs/récepteurs radios comprenant n émetteurs/récepteurs avec n ≥ 1, par exemple A = {A₁, ..., Aₙ}, et un second ensemble B d'émetteurs/récepteurs radios comprenant m émetteurs/récepteurs avec m ≥ 1, par exemple B = {B₁, ..., Bₘ}, un émetteur/récepteur Aᵢ appartenant audit premier ensemble A et Bⱼ appartenant audit second ensemble B étant aptes à communiquer l'un avec l'autre, ledit émetteur/récepteur Aᵢ étant capable d'émettre un signal SAᵢ et de recevoir un signal SBⱼ, et ledit émetteur/récepteur Bⱼ étant capable d'émettre ledit signal SBⱼ et de recevoir ledit signal SAᵢ, ledit émetteur/récepteur Aᵢ étant en particulier configuré pour être mobile et ledit émetteur/récepteur Bⱼ étant en particulier configuré pour être immobile ou fixe, ledit système de détection étant caractérisé en ce qu'il comprend au moins ledit premier et ledit second dispositif.

Finalement, la présente invention revendique également un système de communication comprenant ledit premier ensemble A d'émetteurs/récepteurs radios, ledit second ensemble B d'émetteurs/récepteurs radios, et ledit système de détection automatique tels que préalablement décrits, ledit système de communication sécurisé étant apte à détecter automatiquement une panne ou défaillance d'un de ses émetteurs/récepteurs radios.

En particulier, la méthode selon l'invention est caractérisée en ce que le système de communication comprend au moins un émetteur/récepteur Aᵢ mobile et un nombre m > 1 d'émetteurs/récepteurs Bⱼ fixes, l'indice i allant de 1 à n permettant de différentier et d'identifier lesdits émetteurs/récepteurs Aᵢ du premier ensemble A et l'indice j allant de 1 à m permettant de différentier et d'identifier lesdits émetteurs/récepteurs Bⱼ du second ensemble B, une défaillance dudit émetteur/récepteur Aᵢ mobile étant dès lors détectée dès que les rapports (EBⱼ_SB_{j ·} RBⱼ_SAᵢ) / (RAᵢ_SBⱼ · EAᵢ_SAᵢ) et (EB_{j+1_}SBⱼ₊₁ · RBⱼ₊₁_SAᵢ) / (RAᵢ_SBⱼ₊₁ · EAᵢ -SAᵢ) ne sont plus compris entre lesdites valeurs seuils prédéfinies de détection de panne V1_{i,j} et V2_{i,j} et respectivement V1_{i,7+1} et V2_{i,j+1}, ce qui peut être exprimé de la façon suivante:
si {log(EBⱼ_SBⱼ·RBⱼ_SAᵢ) - log(RAᵢ_SB_{j ·} EAⱼ_SAᵢ) ∉ [log(V1_{i,j}), log(V2_{i,j})]=[S1_{i,j}, S2_{i,j}] et log (EB_{j+1_}SBⱼ₊₁·RBⱼ₊₁_SAᵢ) - log (RAᵢ_SBⱼ₊₁·EAᵢ_SAᵢ) ∉ [log(V1_{i,j+1}), log(V2_{i,j+1})]=[S1_{i,j+1}, S2_{i,j+1}]}, alors il y a une défaillance dudit émetteur/récepteur Aᵢ mobile
et une défaillance dudit émetteur/récepteur fixe Bⱼ est détectée dès que le rapport (EBⱼ_SBⱼ·RBⱼ_SAᵢ)/(RAᵢ_SBⱼ · EAᵢ_SAᵢ) n'est pas compris entre lesdites valeurs seuils prédéfinies de détection de panne V1_{i,j} et V2_{i,j} et le rapport (EBⱼ₊₁_SBⱼ₊₁ · RB_{j+1_}SAᵢ) / (RA_{i_}SBⱼ₊₁ · EA_{i_}SAᵢ) est compris entre lesdites valeurs seuils prédéfinies de détection de panne V1_{i,j+1} et V2_{i,j+1}, ce qui peut être exprimé de la façon suivante :
si {log(EB_{j_}SBⱼ · RBⱼ_SAᵢ) - log(RAᵢ_SBⱼ · EA_{i_}SAᵢ) ∉ [log(V1_{i,j}), log(V2_{i,j})] = S1_{i,j}, S2_{i,j}] et log (EBj+,_SBⱼ₊ₗ -RBⱼ+,_SAᵢ) log(RAi_SBⱼ₊₁ · EAᵢ_SAᵢ) ∈ [log(V1_{i,j+1}), log(V2_{i,j+1})]=[S1_{i,j+1}, S2_{i,j+1}]}, alors il y a une défaillance dudit émetteur/récepteur Bⱼ fixe.

En particulier, l'émetteur/récepteur Aᵢ communique consécutivement avec l'émetteur/récepteur Bⱼ, puis Bⱼ₊₁. Par exemple, l'émetteur/récepteur Aᵢ, et le premier dispositif de détection selon l'invention qui est configuré pour coopérer avec ledit émetteur/récepteur Aᵢ sont montés dans un véhicule guidé apte à se déplacer sur un trajet comprenant en des points fixes lesdits émetteurs/récepteurs Bⱼ avec chacun desquels un second dispositif selon l'invention coopère, ledit véhicule guidé pouvant ainsi se déplacer consécutivement d'un émetteur/récepteur Bⱼ à un émetteur/récepteur Bⱼ₊₁ et ledit émetteur/récepteur Ai échangeant consécutivement des messages avec lesdits émetteurs/récepteurs B₁ à Bₘ.

De manière similaire, la méthode selon l'invention est préférentiellement caractérisée en ce que le système de communication comprend un nombre n > 1 d'émetteurs/récepteurs Aᵢ mobiles et au moins un émetteur/récepteur Bⱼ fixe, une défaillance dudit émetteur/récepteur Bⱼ fixe étant détectée dès que les rapports (EBⱼ_SBⱼ · RBⱼ_SAᵢ) / (RAᵢ_SBⱼ · EAᵢ_SAᵢ) et (EBⱼ_SBⱼ · RBⱼ_SAᵢ₊₁) / (RAᵢ₊₁_SBⱼ · EAᵢ₊₁_SAᵢ₊₁) ne sont plus compris entre lesdites valeurs seuils prédéfinies de détection de panne V1_{i,j} et V2_{i,j} et respectivement V1_{i+1,j} et V2ᵢ₊₁,ⱼ et une défaillance dudit émetteur/récepteur mobile Aᵢ est détectée dès que le rapport (EBⱼ_SBⱼ · RBⱼ_SAᵢ) / (RAᵢ_SBⱼ · EAᵢ_SAᵢ) n'est pas compris entre lesdites valeurs seuils prédéfinies de détection de panne Vl_{i,j} et V2_{i,j} et le rapport (EBⱼ_SB_{j ·} RBⱼ_SAᵢ₊₁) / (RAᵢ₊₁_SBⱼ · EAᵢ₊₁_SAᵢ₊₁) est compris entre lesdites valeurs seuils prédéfinies de détection de panne V1_{i+1,j} et V2_{i+1,j}. En particulier, l'émetteur/récepteur Bⱼ communique consécutivement avec l'émetteur/récepteur Aᵢ, puis Aᵢ₊₁. Par exemple, chacun des émetteurs/récepteurs A₁ à Aₙ coopère avec un premier dispositif de détection selon l'invention et chacun desdits émetteurs/récepteurs A₁ à Aₙ ainsi que le premier dispositif selon l'invention sont configurés pour passer consécutivement auprès dudit émetteur/récepteur Bj.

Préférentiellement, la méthode selon l'invention est apte à détecter une défaillance de l'émission du signal SAᵢ, respectivement SBⱼ, pour l'émetteur/récepteur Aᵢ, respectivement Bⱼ, dès que RAᵢ_SBⱼ > RBⱼ_SAᵢ, respectivement RBⱼ_SAᵢ > FAᵢ_SBⱼ, pour EBⱼ_SBⱼ = EAᵢ_SAᵢ. Similairement, ladite méthode permet en particulier de détecter une défaillance de la réception du signal SBⱼ, respectivement SAᵢ, pour l'émetteur/xécepteur Aᵢ, respectivement Bⱼ, dès que RAᵢ_SBⱼ < RBⱼ_SAᵢ, respectivement RBⱼ_SAᵢ < RAᵢ_SBⱼ, pour EBⱼ_SBⱼ = EAᵢ_SAᵢ.

Préférentiellement, la méthode selon l'invention comprend une comparaison de données RBⱼ_SAᵢ avec des données de référence RBⱼ_SAᵢ_REF. En particulier, la méthode selon l'invention comprend, pour un ensemble de signaux SAᵢ échangés entre l'émetteur/récepteur Aᵢ et l'émetteur/récepteur Bⱼ, une mémorisation d'une donnée RBⱼ_SAᵢ_MAX égale à la donnée RBⱼ_SAᵢ pour laquelle la valeur de la puissance de réception du signal SAᵢ par l'émetteur/récepteur Bⱼ est maximale par rapport à l'ensemble des valeurs de puissances de réception desdits signaux SAᵢ échangés entre l'émetteur/récepteur Aᵢ et l'émetteur/récepteur Bⱼ. Préférentiellement, la méthode selon l'invention comprend également une comparaison de différentes données RBⱼ_SAᵢ_MAX mémorisées successivement pour différents émetteurs/récepteurs Aᵢ et caractérisant chacune la valeur de la puissance de réception maximale du signal SAᵢ par l'émetteur/récepteur Bⱼ pour chacun desdits différents émetteurs/récepteurs Aᵢ qui échangent par exemple chacun consécutivement des signaux SAᵢ avec l'émetteur/récepteur Bⱼ, lesdites différentes données RBⱼ_SAᵢ_MAX étant comparées avec une ou plusieurs données de référence RBⱼ_SAᵢ_REF, où chaque donnée de référence RBⱼ_SAᵢ_REF comprend une valeur de référence de la puissance de réception du signal SAᵢ par l'émetteur/récepteur Bⱼ destinée à être comparée à la valeur de la puissance de réception maximale comprise dans la donnée RBⱼ_SAᵢ_MAX.

Egalement, la méthode selon l'invention comprend préférentiellement une comparaison de données RAᵢ_SBⱼ avec des données de référence RAᵢ_SBⱼ_REF. En particulier, la méthode selon l'invention comprend, pour un ensemble de signaux SBⱼ échangés entre l'émetteur/récepteur Aᵢ et l'émetteur/récepteur Bⱼ, une mémorisation d'une donnée RAᵢ_SBⱼ_MAX égale à la donnée RAᵢ_SBⱼ pour laquelle la valeur de la puissance de réception du signal SBⱼ par l'émetteur/récepteur Aᵢ est maximale par rapport à l'ensemble des valeurs de puissances de réception desdits signaux SBⱼ échangés entre l'émetteur/récepteur Aᵢ et l'émetteur/récepteur Bⱼ. Préférentiellement, la méthode selon l'invention comprend également une comparaison de différentes données RAᵢ_SBⱼ_MAX mémorisées successivement pour différents émetteurs/récepteurs Bⱼ et caractérisant chacune la valeur de la puissance de réception maximale du signal SBⱼ par l'émetteur/récepteur Aᵢ pour chacun desdits différents émetteurs/récepteurs Bⱼ qui échangent par exemple chacun consécutivement des signaux SBⱼ avec l'émetteur/récepteur Aᵢ, lesdites différentes données RAᵢ_SBⱼ_MAX étant comparées avec une ou plusieurs données de référence RAᵢ_SBⱼ_REF, où chaque donnée de référence RAᵢ_SBⱼ_REF comprend une valeur de référence de la puissance de réception du signal SBⱼ par l'émetteur/récepteur Aᵢ destinée à être comparée à la valeur de la puissance de réception maximale comprise dans la donnée RAᵢ_SBⱼ_MAX.

Avantageusement, une telle comparaison des données RAᵢ_SBⱼ_MAX et RBⱼ_SAᵢ_MAX avec respectivement RBⱼ_SAᵢ_REF et RAᵢ_SBⱼ_REF permet de déterminer des défaillances entrainant une atténuation symétrique de l'émission et/ou de la réception des signaux SAᵢ et/ou SBⱼ.

Ladite méthode de détection automatique selon l'invention comprend préférentiellement une cartographie des émetteurs/récepteurs fixes. En particulier, ladite cartographie est apte à répertorier la position géographique de chaque émetteur/récepteur fixe, préférentiellement, la position géographique de chaque émetteur/récepteur fixe coopérant avec un second dispositif selon l'invention. En particulier, ledit analyseur de signal comprend notamment une banque de données destinée à la classification de chaque émetteur/récepteur fixe et comprenant des données géographiques relatives à ladite position géographique de chaque émetteur/récepteur fixe coopérant avec un second dispositif selon l'invention. Préférentiellement, ladite banque de données comprend pour chacune desdites données géographiques, i.e. pour chacun desdits émetteurs/récepteurs fixes, une ou respectivement plusieurs données de référence, chacune de ces données de référence comprenant une valeur de référence de la puissance de réception d'un signal émis par ledit émetteur/récepteur fixe, ladite valeur de référence étant notamment obtenue par mesure de la puissance de réception dudit signal émis par ledit émetteur/récepteur fixe au moyen d'un premier dispositif selon l'invention à une position géographique distante de la position géographique dudit émetteur/récepteur fixe. Chaque donnée de référence associée à un émetteur/récepteur fixe est en particulier une valeur de la puissance d'un signal émis par ledit émetteur/récepteur fixe et mesurée à une position géographique distante dudit émetteur/récepteur fixe, ledit signal étant notamment émis selon des conditions d'émission prédéfinies.

Finalement, un exemple de réalisation et d'application permettant de mieux comprendre la présente invention est fourni à l'aide de la figure suivante:

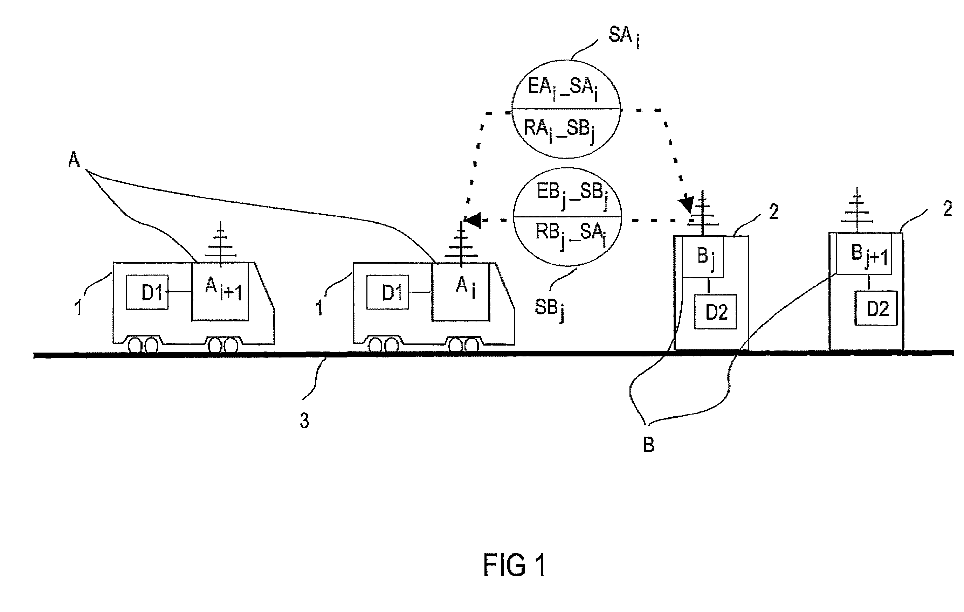

- Figure 1: Exemple de réalisation d'un système de détection automatique d'une panne ou défaillance d'un émetteur/récepteur radio selon l'invention.

La Figure 1 présente un mode de réalisation préférentiel d'un système de détection automatique d'une panne ou défaillance d'un émetteur/récepteur radio selon l'invention. Un système de communication permet par exemple une communication entre au moins un objet mobile et au moins un objet fixe. Ledit objet mobile est par exemple un véhicule 1 capable de circuler le long d'un guide 3, par exemple un rail, et ledit objet fixe est par exemple un dispositif sol 2 disposé à intervalles réguliers, à proximité dudit guide 3.

Ledit système de communication comprend en particulier un premier ensemble A d'émetteurs/récepteurs radios comprenant n émetteurs/récepteurs avec n ≥ 1, par exemple A = {A₁,...,Aₙ}, et un second ensemble B d'émetteurs/récepteurs radios comprenant m émetteurs/récepteurs avec m ≥ 1, par exemple B = {B₁,..,Bₘ}. Sur la figure 1, seuls les émetteurs/récepteurs Aᵢ₊₁ et Aᵢ appartenant audit premier ensemble A et les émetteurs/récepteurs Bⱼ et Bⱼ₊₁ appartenant audit second ensemble B sont représentés.

De manière générale, l'ensemble des émetteurs/récepteurs appartenant audit premier ensemble A, en l'occurrence Aᵢ₊₁ et Aᵢ, et l'ensemble des émetteurs/récepteurs appartenant audit second ensemble B, en l'occurrence Bⱼ et Bⱼ₊₁, sont aptes à communiquer les uns avec les autres, ledit émetteur/récepteur Aᵢ étant capable d'émettre un signal SAᵢ et de recevoir un signal SBⱼ, et ledit émetteur/récepteur Bⱼ étant capable d'émettre ledit signal SBⱼ et de recevoir ledit signal SAᵢ.

Chaque émetteur/récepteur dudit premier ensemble A est en particulier caractérisé en ce qu'il est mobile. Par exemple, chaque émetteur/récepteur dudit premier ensemble, en l'occurrence ledit émetteur/récepteur Aᵢ et ledit émetteur/récepteur Aᵢ₊₁, est préférentiellement configuré pour être embarqué dans ledit véhicule 1, chaque émetteur/récepteur équipant dès lors un véhicule 1 différent. Chaque émetteur/récepteur dudit second ensemble B est en particulier caractérisé en ce qu'il est immobile ou fixe. Par exemple, chaque émetteur/récepteur dudit second ensemble B, en l'occurrence ledit émetteur/récepteur Bⱼ et ledit émetteur/récepteur Bⱼ₊₁, est préférentiellement configuré pour être monté dans un dispositif sol 2 disposé à proximité dudit guide 3, chaque émetteur/récepteur équipant dès lors un dispositif sol 2 différent. Chaque véhicule 1 se déplaçant le long du guide 3 passe successivement à proximité des dispositifs sols 2 placés en bordure de guide 3, et communique via son émetteur/récepteur Aᵢ, notamment successivement, avec les émetteurs/récepteurs successifs, Bⱼ, Bⱼ₊₁, équipant lesdits dispositifs sols 2.

La présente invention concerne en particulier un premier dispositif D1 pour détecter automatiquement une panne ou défaillance d'un émetteur/récepteur radio dudit système de communication. Préférentiellement, chaque émetteur/récepteur dudit premier ensemble A coopère ou est apte à coopérer avec ledit premier dispositif D1. Préférentiellement, chaque premier dispositif D1 est connectable ou connecté à un émetteur/récepteur dudit premier ensemble A, de sorte que, par exemple, chaque émetteur/récepteur dudit premier ensemble A soit connecté à un premier dispositif selon l'invention. La connexion dudit premier dispositif D1 selon l'invention audit émetteur/récepteur dudit premier ensemble A permet d'échanger des données et des commandes entre ledit émetteur/récepteur et ledit premier dispositif D1. A cette fin, ledit premier dispositif D1 selon l'invention est également embarquable ou embarqué dans le véhicule 1 comprenant l'émetteur/récepteur avec lequel il est destiné à coopérer.

Chaque premier dispositif D1 selon l'invention comprend au moins:
- un dispositif de mesure de puissance d'émission de signal capable d'une part de mesurer la puissance du signal SAᵢ à son émission par l'émetteur/récepteur Aᵢ avec lequel il est apte à coopérer et d'autre part de fournir une donnée EAᵢ_SAᵢ relative à la puissance à laquelle est émis le signal SAᵢ par ledit émetteur/récepteur Aᵢ;
- un dispositif de mesure de puissance de réception de signal capable d'une part de mesurer la puissance du signal SBⱼ à sa réception par l'émetteur/récepteur Aᵢ avec lequel il est apte à coopérer et d'autre part de fournir une donnée RAᵢ_SBⱼ relative à ladite puissance du signal SBⱼ à sa réception par l'émetteur/récepteur Aᵢ;
- préférentiellement un dispositif d'incorporation de données de puissance d'un signal capable d'incorporer au signal SAᵢ d'une part la donnée RAᵢ_SBⱼ relative à la puissance de réception du signal SBⱼ reçu par l'émetteur/récepteur Aᵢ et mesurable par ledit dispositif de mesure de puissance de réception et d'autre part la donnée EAᵢ_SAᵢ relative à la puissance d'émission du signal SAᵢ mesurable par le dispositif de mesure de puissance d'émission et destinée à être reçu par l'émetteur/récepteur Bⱼ;
- un analyseur de signal capable de collecter les données EAᵢ_SAᵢ et RAᵢ_SBⱼ auprès desdits dispositifs de mesure de puissance d'émission et de réception configurés pour coopérer avec ledit émetteur/récepteur Aᵢ, ainsi que d'extraire dudit signal SBⱼ des données EBⱼ_SBⱼ et RBⱼ_SAᵢ, où RBⱼ_SAᵢ et EBⱼ_SBⱼ sont respectivement une donnée relative à la puissance du signal SAᵢ à sa réception par l'émetteur/récepteur Bⱼ notamment mesurée par un dispositif de mesure de puissance de réception configuré pour coopérer avec ledit émetteur/récepteur Bⱼ, et une donnée relative à la puissance à laquelle a été émis le signal SBⱼ par ledit émetteur/récepteur Bⱼ, notamment mesurée par un dispositif de mesure de puissance d'émission configuré pour coopérer avec ledit émetteur/récepteur Bⱼ, les données RBⱼ_SAᵢ et EBⱼ_SBⱼ ayant en particulier été incorporées audit signal SBⱼ par un dispositif d'incorporation de données de puissance configuré pour coopérer avec ledit émetteur/récepteur Bⱼ, ledit analyseur de signal étant de plus capable de comparer automatiquement les rapports des données EBⱼ_SBⱼ / RAᵢ_SBⱼ et EAᵢ_SAᵢ / RBⱼ_SAᵢ afin de déterminer une défaillance ou panne d'un desdits émetteurs/récepteurs Aᵢ et/ou Bⱼ.

La présente invention concerne en particulier un second dispositif D2 pour détecter automatiquement une panne ou défaillance d'un émetteur/récepteur radio dudit système de communication. Préférentiellement, chaque émetteur/récepteur dudit second ensemble B coopère ou est apte à coopérer avec ledit second dispositif D2. Préférentiellement, chaque second dispositif D2 est connectable ou connecté à un émetteur/récepteur dudit second ensemble B, de sorte que, par exemple, chaque émetteur/récepteur dudit second ensemble B soit connecté à un second dispositif D2 selon l'invention. La connexion dudit second dispositif D2 selon l'invention audit émetteur/récepteur dudit second ensemble B permet d'échanger des données et des commandes entre ledit émetteur/récepteur et ledit second dispositif D2. A cette fin, ledit second dispositif D2 selon l'invention équipe ou est au moins configurée pour équiper le dispositif sol 2 comprenant l'émetteur/récepteur avec lequel il est destiné à coopérer.

Préférentiellement, chaque second dispositif D2 selon l'invention comprend au moins:
- un dispositif de mesure de puissance d'émission de signal capable d'une part de mesurer la puissance du signal SBⱼ à son émission par l'émetteur/récepteur Bⱼ avec lequel il est apte à coopérer et d'autre part de fournir une donnée EBⱼ_SBⱼ relative à la puissance à laquelle est émis le signal SBⱼ par ledit émetteur/réeepteur Bⱼ;
- un dispositif de mesure de puissance de réception de signal capable d'une part de mesurer la puissance du signal SAᵢ à sa réception par l'émetteur/récepteur Bⱼ avec lequel il est apte à coopérer et d'autre part de fournir une donnée RBⱼ_SAᵢ relative à la puissance du signal SAᵢ à sa réception par l'émetteur/récepteur Bⱼ;
- un dispositif d'incorporation de données de puissance d'un signal capable d'incorporer au signal SBⱼ d'une part la donnée RBⱼ_SAᵢ relative à la puissance de réception du signal SAᵢ reçu par l'émetteur/récepteur Bⱼ et mesurable par ledit dispositif de mesure de puissance de réception et d'autre part la donnée EBⱼ_SBⱼ relative à la puissance d'émission du signal SBⱼ mesurable par le dispositif de mesure de puissance d'émission et destinée à être reçue par l'émetteur/récepteur Aᵢ;
- préférentiellement un analyseur de signal capable de collecter les données EBⱼ_SBⱼ et RBⱼ_SAᵢ auprès desdits dispositifs de mesure de puissance d'émission et de réception configurés pour coopérer avec ledit émetteur/récepteur Bⱼ, ainsi que d'extraire dudit signal SAᵢ des données EAᵢ_SAᵢ et RAᵢ_SBⱼ , où RAᵢ_SBⱼ et EAᵢ_SAᵢ sont respectivement une donnée relative à la puissance du signal SBⱼ à sa réception par l'émetteur/récepteur Aᵢ notamment mesurée par un dispositif de mesure de puissance de réception configuré pour coopérer avec ledit émetteur/récepteur Aᵢ, et une donnée relative à la puissance à laquelle a été émis le signal SAᵢ par ledit émetteur/récepteur Aᵢ, notamment mesurée par un dispositif de mesure de puissance d'émission configuré pour coopérer avec ledit émetteur/récepteur Aᵢ, les données RAᵢ_SBⱼ et EAᵢ_SAᵢ ayant en particulier été incorporées audit signal SAᵢ par un dispositif d'incorporation de données de puissance configuré pour coopérer avec ledit émetteur/récepteur Aᵢ, ledit analyseur de signal étant de plus capable de comparer automatiquement les rapports des données EBⱼ_SBⱼ / RAᵢ_SBⱼ et EAᵢ_SAᵢ / RBⱼ_SAᵢ afin de déterminer une défaillance ou panne d'un desdits émetteurs/récepteurs Aᵢ ou Bⱼ.

En particulier, ledit premier dispositif D1 et ledit second dispositif D2 selon l'invention forment un système de détection capable de détecter automatiquement une panne ou défaillance d'un émetteur/récepteur radio dudit système de communication. Ledit système de détection est en particulier apte à coopérer avec ledit système de communication comprenant au moins un émetteur/récepteur fixe et un émetteur/récepteur mobile afin de détecter automatiquement ladite panne ou défaillance d'un desdits émetteurs/récepteurs, fixe ou mobile. Préférentiellement, ladite présente invention concerne également un système de communication comprenant ledit premier ensemble A et ledit second ensemble B tels que décrits précédemment, et caractérisé en ce que chacun desdits émetteurs/récepteurs dudit système de communication comprend et coopère avec un premier dispositif D1 ou un second dispositif D2, en particulier avec ledit premier dispositif D1 si ledit émetteur/récepteur est mobile et avec ledit second dispositif D2 si ledit émetteur/récepteur est fixe ou immobile.

Préférentiellement, ledit premier dispositif D1 et/ou ledit second dispositif D2 sont aptes à comprendre un analyseur de signal distant, i.e. se trouvant à une position éloignée dudit premier et/ou second dispositif, pouvant par exemple équiper un poste central de commande à distance, de sorte que l'analyse et la collecte des données est apte à se dérouler à une position distante dudit premier dispositif et/ou dudit second dispositif, de manière centralisée.

En résumé, les dispositifs et la méthode selon l'invention présentent les avantages suivants par rapport aux techniques existantes:
- ils utilisent des comparaisons de niveaux de puissance de signal reçus afin de déterminer une panne ou défaillance d'un émetteur/récepteur radio, contrairement aux techniques antérieurs se basant sur des mesures multiples de niveaux de signal reçus;
- ils utilisent les émetteurs et récepteurs opérationnels eux-mêmes et ne nécessitent pas de mesureurs calibrés supplémentaires. Par exemple, lesdits moyens de détermination d'une puissance d'émission, ou respectivement de réception, sont compris dans une carte radio dudit émetteur/récepteur Aᵢ ou Bⱼ, ladite carte radio (p.ex. une PCB) pouvant par exemple recevoir et simultanément mesurer des niveaux de puissance reçus. Par contre, elle ne pourra pas émettre et simultanément mesurer le niveau de puissance d'émission du signal, mais pourra indiquer dans le signal envoyé la puissance supposée d'émission définie en fonction des paramètres d'amplifications utilisés;
- ils permettent de faire des contrôles des puissances des signaux à chaque transmission de données entre les émetteurs/récepteurs Aᵢ et Bⱼ, une panne étant détectée dès que l'émetteur/récepteur mobile est passé devant deux émetteurs/récepteurs fixes (i.e. dès qu'il a communiqué avec deux émetteurs/récepteurs fixes), ou dès qu'un émetteur/récepteur fixe a communiqué avec deux émetteurs/récepteurs mobiles. Ainsi, un contrôle peut être effectué toutes les dizaines de minutes si la cadence des émetteurs/récepteurs mobiles est suffisante, au lieu de contrôles effectués tous les six mois selon les techniques existantes.

## Revendications

1. Méthode de détection automatique d'une défaillance d'un émetteur/récepteur radio d'un système de communication comprenant un premier ensemble A d'émetteurs/récepteurs radios comprenant n ≥ 1 émetteurs/récepteurs, et un second ensemble B d'émetteurs/récepteurs radios comprenant m ≥ 1 émetteurs/récepteurs, un émetteur/récepteur Aᵢ appartenant à audit premier ensemble A et un émetteur/récepteur Bⱼ appartenant audit second ensemble B étant aptes à communiquer l'un avec l'autre, ladite méthode comprenant les étapes suivantes:
- une émission d'un signal SAᵢ par ledit émetteur/récepteur Aᵢ;
- une réception dudit signal SAᵢ par ledit émetteur/récepteur Bⱼ;
- une émission par ledit émetteur/récepteur Bⱼ d'un signal SBⱼ;
- une réception dudit signal SBⱼ par ledit émetteur/récepteur Aᵢ;
ladite méthode étant **caractérisée en ce que**:
- ledit signal SBⱼ comprend une donnée EBⱼ_SBⱼ relative à la puissance à laquelle est émis ledit signal SBⱼ par ledit émetteur/récepteur Bⱼ, et une donnée RBⱼ_SAᵢ relative à la puissance du signal SAᵢ à sa réception par ledit émetteur/récepteur Bⱼ;
- par comparaison des rapports des données EBⱼ_SBⱼ/RAᵢ_SBⱼ et EAᵢ_SAᵢ/RBj_SAᵢ est déterminée la défaillance d'un desdits émetteurs/récepteurs Aᵢ ou Bⱼ, où les données RAᵢ_SBⱼ et EAᵢ_SAᵢ, sont respectivement une donnée relative à la puissance du signal SBⱼ à sa réception par l'émetteur/récepteur Aᵢ, et une donnée relative à la puissance à laquelle a été émis le signal SAᵢ par ledit émetteur/récepteur Aᵢ-

2. Méthode selon la revendication 1, **caractérisé en ce que** ladite défaillance est détectée dès que le rapport des données (EBⱼ_SBⱼ ·RBⱼ_SAᵢ) / (RAᵢ_SBⱼ ·EAᵢ_SAᵢ) n'est plus compris entre des valeurs seuils prédéfinies de détection de panne V1_{i,j} et V2_{i,j}.

3. Méthode selon une des revendications 1 à 2, **caractérisée en ce que** chaque émetteur/récepteur d'un desdits ensembles A ou B d'émetteurs/récepteurs radios est mobile et que chaque émetteur/récepteur de l'autre desdits ensemble, respectivement B ou A, est fixe.

4. Méthode selon une des revendications 1 à 3, **caractérisée en ce que** ledit signal SAᵢ comprend ladite donnée EAᵢ_SAᵢ et ladite donnée RAᵢ_SBⱼ.

5. Méthode selon une des revendications 2 à 4, **caractérisée en ce que** le système de communication comprend au moins ledit émetteur/récepteur Aᵢ mobile et un nombre m > 1 d'émetteurs/récepteurs Bⱼ fixes, une défaillance dudit émetteur/récepteur Aᵢ mobile étant détectée dès que les rapports (EBⱼ_SBⱼ · RBⱼ_SAᵢ)/(RAᵢ_SBⱼ · EAᵢ_SAᵢ) et (EBⱼ₊₁_SBⱼ₊₁ ·RBⱼ₊₁_SAᵢ) / (RAᵢ_SBⱼ₊₁ · EAᵢ_SAᵢ) ne sont plus compris entre lesdites valeurs seuils prédéfinies de détection de panne V1_{i,j} et V2_{i,j}, et Vl_{i,j+1} et V2ᵢ,ⱼ₊₁ et une défaillance dudit émetteur/récepteur fixe Bⱼ est détectée dès que le rapport (EBⱼ_SBⱼ ·RBⱼ_SAᵢ) / (RAᵢ_SBⱼ ·EAᵢ_SAᵢ) n'est pas compris entre lesdites valeurs seuils prédéfinies de détection de panne V1_{i,j} et V2_{i,j} et le rapport (EBⱼ₊₁_SBⱼ₊₁ ·RBⱼ₊₁_SAᵢ) / (RAᵢ_SBⱼ₊₁ ·EAᵢ_SAᵢ) est compris entre lesdites valeurs seuils prédéfinies de détection de panne V1_{i,j+1} et V2_{i,j+1}.

6. Méthode selon une des revendications 2 à 4, **caractérisée en ce que** le système de communication comprend un nombre n > 1 d'émetteurs/récepteurs Aᵢ mobiles et au moins un émetteur/récepteur Bⱼ fixe, une défaillance dudit émetteur/récepteur Bⱼ fixe étant détectée dès que les rapports (EBⱼ_SBⱼ ·RBⱼ_SAᵢ) / (RAᵢ_SBⱼ ·EAᵢ_SAᵢ) et (EBⱼ_SBⱼ ·RBⱼ_SAᵢ₊₁) / (RAᵢ₊₁_SBⱼ ·EAᵢ₊₁_SAᵢ₊₁) ne sont plus com-pris entre lesdites valeurs seuils prédéfinies de détection de panne V1ᵢ,ⱼ et V_{2i,j} et V1_{i+1,j} et V2_{i+1,j} et une défaillance dudit émetteur/récepteur mobile Aᵢ est détectée dès que le rapport (EBⱼ_SBⱼ ·RBⱼ_SAᵢ) / (RAᵢ_SBⱼ ·EAᵢ_SAᵢ) n'est pas compris entre lesdites valeurs seuils prédéfinies de détection de panne V1_{i,j} et V2_{i,j} et le rapport (EBⱼ_SBⱼ·RBⱼ_SAᵢ₊₁) / (RAᵢ₊₁_SBⱼ ·EAᵢ₊₁_SAᵢ₊₁) est compris entre lesdites valeurs seuils prédéfinies de détection de panne V1_{i+1,j} et V2_{i+1,j}.

7. Méthode selon une des revendications 1 à 6, **caractérisée en ce qu'**une défaillance de l'émission du signal SAᵢ, respectivement SBⱼ, de l'émetteur/récepteur Aᵢ, respectivement Bⱼ, est détectée dès que RAᵢ_SBⱼ > RBⱼ_SAᵢ, respectivement RBⱼ_SAᵢ > RAᵢ_SBⱼ, pour EBⱼ_SBⱼ = EAᵢ_SAᵢ.

8. Méthode selon une des revendications 1 à 7, **caractérisée en ce qu'**une défaillance de la réception du signal SBⱼ, respectivement SAᵢ de l'émetteur/récepteur Aᵢ, respectivement Bⱼ, est détectée dès que RAᵢ_SBⱼ < RBⱼ_SAᵢ, respectivement RBⱼ_SAᵢ < RA_{i_}SBⱼ, pour EBⱼ_SBⱼ = EAᵢ_SAᵢ.

9. Méthode selon une des revendications 1 à 8, **caractérisée en ce qu'**elle comprend une comparaison de données RBⱼ_SAᵢ avec des données de référence RBⱼ_SAᵢ_REF et/ou une comparaison de données RAᵢ_SBⱼ avec des données de référence RAᵢ_SBⱼ_REF.

10. Premier dispositif pour détecter automatiquement une défaillance d'un émetteur/récepteur radio d'un système de communication comprenant un premier ensemble A d'émetteurs/récepteurs radios comprenant n ≥ 1 émetteurs/récepteurs, et un second ensemble B d'émetteurs/récepteurs radios comprenant m ≥ 1 émetteurs/récepteurs, un émetteur/récepteur Aᵢ appartenant audit premier ensemble A et Bⱼ appartenant audit second ensemble B étant aptes à communiquer l'un avec l'autre, ledit émetteur/récepteur Aᵢ étant capable d'émettre un signal SAᵢ et de recevoir un signal SBⱼ, et ledit émetteur/récepteur Bⱼ étant capable d'émettre ledit signal SBⱼ et de recevoir ledit signal SAᵢ, ledit premier dispositif étant **caractérisé en ce qu'**il comprend au moins:
- un moyen de détermination d'une puissance d'émission de signal capable d'une part de déterminer la puissance du signal SAᵢ à son émission par l'émetteur/récepteur Aᵢ avec lequel il est apte à coopérer et d'autre part de fournir une donnée EAᵢ_SAᵢ relative à la puissance à laquelle est émis le signal SAᵢ par ledit émetteur/récepteur Aᵢ;
- un moyen de détermination d'une puissance de réception de signal capable d'une part de déterminer la puissance du signal SBⱼ à sa réception par l'émetteur/récepteur Aᵢ avec lequel il est apte à coopérer et d'autre part de fournir une donnée RAᵢ_SBⱼ relative à la puissance du signal SBⱼ à sa réception par l'émetteur/récepteur Aᵢ;
- un analyseur de signal capable de collecter les données EAᵢ_SAᵢ et RAᵢ_SBⱼ auprès desdits dispositifs de mesure de puissance d'émission et de réception configurés pour coopérer avec ledit émetteur/récepteur Aᵢ, ainsi que d'extraire dudit signal SBⱼ des données EBⱼ_SBⱼ et RBⱼ_SAᵢ, où RBⱼ_SAᵢ et EBⱼ_SBⱼ sont respectivement une donnée relative à la puissance du signal SAᵢ à sa réception par l'émetteur/récepteur Bⱼ et une donnée relative à la puissance à laquelle a été émis le signal SBⱼ par ledit émetteur/récepteur Bⱼ, ledit analyseur de signal étant de plus capable de comparer automatiquement les rapports des données EBⱼ_SBⱼ/RAᵢ_SBⱼ et EAᵢ_SAᵢ/RBⱼ_SAᵢ afin de déterminer une défaillance d'un desdits émetteurs/récepteurs Aᵢ et/ou Bⱼ.

11. Premier dispositif selon la revendication 10, **caractérisé en ce qu'**il comprend un dispositif d'incorporation de données de puissance d'un signal capable d'incorporer au signal SAᵢ d'une part la donnée RAᵢ_SBⱼ relative à la puissance de réception du signal SBⱼ reçu par l'émetteur/récepteur Aᵢ et déterminable par ledit moyen de détermination de puissance de réception et d'autre part la donnée EAᵢ_SAᵢ relative à la puissance d'émission du signal SAᵢ déterminable par le moyen de détermination de puissance d'émission et destinée à être reçu par l'émetteur/récepteur Bⱼ.

12. Second dispositif pour détecter automatiquement une défaillance d'un émetteur/récepteur radio d'un système de communication comprenant un premier ensemble A d'émetteurs/récepteurs radios comprenant n ≥ 1 émetteurs/récepteurs, et un second ensemble B d'émetteurs/récepteurs radios comprenant m ≥ 1 émetteurs/récepteurs, un émetteur/récepteur Aᵢ appartenant audit premier ensemble A et Bⱼ appartenant audit second ensemble B étant aptes à communiquer l'un avec l'autre, ledit émetteur/récepteur Aᵢ étant capable d'émettre un signal SAᵢ et de recevoir un signal SBⱼ, et ledit émetteur/récepteur Bⱼ étant capable d'émettre ledit signal SBⱼ et de recevoir ledit signal SAᵢ, ledit second dispositif étant **caractérisé en ce qu'**il comprend au moins:
- un moyen de détermination d'une puissance d'émission de signal capable d'une part de déterminer la puissance du signal SBⱼ à son émission par l'émetteur/récepteur Bⱼ avec lequel il est apte à coopérer et d'autre part de fournir une donnée EBⱼ_SBⱼ relative à la puissance à laquelle est émis le signal SBⱼ par ledit émetteur/récepteur Bⱼ;
- un moyen de détermination d'une puissance de réception de signal capable d'une part de déterminer la puissance du signal SAᵢ à sa réception par l'émetteur/récepteur Bⱼ avec lequel il est apte à coopérer et d'autre part de fournir une donnée RBⱼ_SAᵢ relative à la puissance du signal SAᵢ à sa réception par l'émetteur/récepteur Bⱼ;
- un dispositif d'incorporation de données de puissance d'un signal capable d'incorporer au signal SBⱼ d'une part la donnée RBⱼ_SAᵢ relative à la puissance de réception du signal SAᵢ reçu par l'émetteur/récepteur Bⱼ et déterminable par ledit moyen de détermination de puissance de réception et d'autre part la donnée EBⱼ_SBⱼ relative à la puissance d'émission du signal SBⱼ déterminable par le moyen de détermination de puissance d'émission et destinée à être reçue par l'émetteur/récepteur Aᵢ.

13. Second dispositif selon la revendication 11, **caractérisé en ce qu'**il comprend un analyseur de signal capable de collecter les données EBⱼ_SBⱼ et RBⱼ_SAᵢ auprès desdits moyens de détermination de puissance d'émission et de réception configurés pour coopérer avec ledit émetteur/récepteur Bⱼ, ainsi que d'extraire dudit signal SAᵢ des données EAᵢ_SAᵢ et RAᵢ_SBⱼ, où RAᵢ_SBⱼ et EAᵢ_SAᵢ sont respectivement une donnée relative à la puissance du signal SBⱼ à sa réception par l'émetteur/récepteur Aᵢ et une donnée relative à la puissance à laquelle a été émis le signal SAᵢ par ledit émetteur/récepteur Aᵢ, ledit analyseur de signal étant de plus capable de comparer automatiquement les rapports des données EBⱼ_SB_{j/}RAᵢ_SBⱼ et EA_{i_}SAᵢ/RBⱼ_SAᵢ afin de déterminer une défaillance d'un desdits émetteurs/récepteurs Aᵢ ou Bⱼ.

14. Système de détection automatique d'une panne d'un émetteur/récepteur radio d'un système de communication comprenant un premier ensemble A d'émetteurs/récepteurs radios comprenant n ≥ 1 émetteurs/récepteurs, et un second ensemble B d'émetteurs/récepteurs radios comprenant m ≥ 1 émetteurs/récepteurs, un émetteur/récepteur Aᵢ appartenant audit premier ensemble A et Bⱼ appartenant audit second ensemble B étant aptes à communiquer l'un avec l'autre, ledit émetteur/récepteur Aᵢ étant capable d'émettre un signal SAᵢ et de recevoir un signal SBⱼ, et ledit émetteur/récepteur Bⱼ étant capable d'émettre ledit signal SBⱼ et de recevoir ledit signal SAᵢ, ledit système de détection étant **caractérisé en ce qu'**il comprend au moins ledit premier dispositif selon une des revendications 10 ou 11 et ledit second dispositif selon une des revendications 12 ou 13.

15. Système de communication comprenant ledit système de détection automatique selon la revendication 14, et ledit premier ensemble A d'émetteurs/récepteurs radios, ledit second ensemble B d'émetteurs/récepteurs radios, ledit système de communication étant apte à détecter automatiquement une panne ou défaillance d'un de ses émetteurs/récepteurs radios.
